# EUROPÄISCHE PATENTSCHRIFT

(11) **EP 4 021 689 B1**
(45) Veröffentlichungstag und Bekanntmachung des Hinweises auf die Patenterteilung: **28.06.2023**
(21) Anmeldenummer: 20761137.7
(22) Anmeldetag: 13.08.2020
(51) Int. Cl.: B25J 15/00, B25J 15/02

(54) **GREIFERANORDNUNG ZUR KOMPONENTENBESTÜCKUNG VON MONTAGEPLATTEN IM SCHALTANLAGEN- UND STEUERUNGSBAU**
GRIPPER ARRANGEMENT FOR POPULATING MOUNTING PLATES WITH COMPONENTS IN SWITCHGEAR AND CONTROL ENGINEERING
ENSEMBLE DE PRÉHENSION PERMETTANT LE MONTAGE DE COMPOSANTS SUR DES PLAQUES DE MONTAGE DANS LA CONSTRUCTION D'INSTALLATIONS DE DISTRIBUTION ÉLECTRIQUE ET DE COMMANDES

(30) Priorität: 29.08.2019 DE 102019123241; 09.07.2020 DE 102020118136
(43) Veröffentlichungstag der Anmeldung: 06.07.2022
(73) Patentinhaber: Rittal GmbH & Co. KG, 35745 Herborn (DE)
(72) Erfinder: BÄCHLER, Andreas Michael, 35708 Haiger (DE); REDER, Lars-Erik, 35390 Gießen (DE)
(74) Vertreter: Angerhausen, Christoph
(86) Internationale Anmeldenummer: PCT/DE2020/100705
(87) Internationale Veröffentlichungsnummer: WO 2021/037305

(56) Entgegenhaltungen:
- EP-A1- 1 033 800
- EP-B1- 1 033 800
- WO-A1-2010/057769
- WO-A1-2013/002269
- CN-A- 109 093 636
- DE-A1-102016 004 924
- DE-A1-102016 103 516

## Beschreibung

Die Erfindung geht aus von einer Greiferanordnung zur Komponentenbestückung von Montageplatten im Schaltanlagen- und Steuerungsbau, wobei die Greiferanordnung zwei Greiferbacken aufweist, deren Abstand zueinander über eine Linearstelleinheit einstellbar ist, wobei die Greiferbacken an ihren voneinander abgewandten Außenseiten endseitig jeweils mindestens einen Vorsprung aufweisen, plattenförmig ausgebildet sind und eine Dicke in Verstellrichtung der Greiferbacken zueinander aufweisen, die wesentlich kleiner als eine Breite und eine Höhe der Greiferbacken senkreckt zueinander und senkrecht zu der Dicke ist, wobei mindestens eine der Greiferbacken an ihrer der jeweils gegenüber liegenden Greiferbacke zugewandten Innenseite eine Ausnehmung aufweist. Eine derartige Greiferanordnung ist aus der WO 2010/057 769 A1 bekannt. Ähnliche Greiferanordnungen sind aus der DE 10 2016 111 893 A1, der DE 10 2016 004924 A1 und der CN 109 093 636 A bekannt.

Die bekannten Greiferanordnungen begegnen der Problematik, dass im Schaltanlagen- und Steuerungsbau eine große Vielfalt unterschiedlichster Komponenten mit stark variierenden Abmessungen und mechanischen Festigkeiten verarbeitet werden müssen, beispielsweise Kabelkanäle einerseits und Profil- und Montageschienen sowie diverse Bestückungskomponenten wie Reihenklemmen andererseits. Um auf diese Vielzahl zu verbauender Komponenten reagieren zu können, ist es daher bisher erforderlich, mehrere Greiferanordnungen der eingangs beschriebenen Art vorzusehen oder im Verlauf der Komponentenbestückung der Montageplatte die Greiferbacken zu wechseln, um auf die jeweils vorgefundenen Abmessungen und mechanischen Festigkeiten der zu verbauenden Komponenten reagieren zu können.

Es ist daher die Aufgabe der Erfindung, eine Greiferanordnung der eingangs beschriebenen Art derart weiterzuentwickeln, dass sie für eine Vielzahl unterschiedlicher Komponenten im Schaltanlagen- und Steuerungsbau geeignet ist und insbesondere sowohl die Verarbeitung biegeschlaffer Teile wie Kabelkanäle sowie die Verarbeitung von Bestückungskomponenten, wie Profil- und Montageschienen, Reihenklemmen, elektrische Schalt- und Steuerungskomponenten und dergleichen erlaubt.

Diese Aufgabe wird durch eine Greiferanordnung mit den Merkmalen des Anspruchs 1 gelöst. Die abhängigen Ansprüche betreffen jeweils vorteilhafte Ausführungsformen der Erfindung.

Durch die Verwendung von Greiferplatten der zuvor beschriebenen Art ist es möglich, einerseits in bekannter Weise mechanisch feste Komponenten wie Montageschienen, elektrische Komponenten des Schaltanlagen- und Steuerungsbaus und dergleichen zwischen den einander zugewandten Innenseiten der Greiferbacken einzuklemmen und zu manövrieren. Andererseits erlauben es die plattenförmigen Greiferbacken mit ihren an den gegenüberliegenden Außenseiten angeordneten Vorsprüngen, dass auch biegeschlaffe Teile wie Kabelkanäle sicher befördert werden können, beispielsweise indem die Greiferbacken über ihre voneinander abgewandten Außenseiten an den gegenüberliegenden Innenseiten des Kabelkanals vollflächig oder zumindest teilflächig zur Anlage gebracht werden und dadurch einerseits aufgrund ihrer plattenförmigen Geometrie den Kabelkanal stabilisieren, während sie mit ihren endseitigen Vorsprüngen in den Kabelkanal eingreifen können, um den Kabelkanal an der Greiferanordnung festzulegen.

Eine Linearstelleinheit im Sinne der Erfindung kann jegliche, vorzugsweise motorisch angetriebene Kinematik sein oder aufweisen, die eine lineare Verstellung der Greiferbacken zueinander erlaubt. Dazu muss die Linearstelleinheit nicht zwangläufig einen Linearstellantrieb aufweisen. Beispielsweise kann die Linearstelleinheit einen Winkelgreifer, einen Schwenkgreifer oder einen Radialgreifer aufweisen.

Ein Kabelkanal der zuvor beschriebenen Art kann insbesondere ein im Schaltanlagen- und Steuerungsbau gängiger Verdrahtungskanal mit rechteckigem Querschnitt sein, welcher beispielsweise im Wesentlichen aus einer geschlossenen Bodenseite und sich davon, die gegenüberliegenden Seitenwände des Kabelkanals bildende, senkrecht erstreckende Finger aufweist, so dass zwischen benachbarten Fingern ein Kabel oder sonstiger Leiter in den Kabelkanal eingeführt oder aus diesem herausgeführt werden kann. An den freien Enden weisen die Finger häufig eine Rastkontur auf, um eine Abdeckung des Kabelkanals lösbar festzulegen. Ein derartiger Kabelkanal ist beispielsweise aus der DE 20115 768 U1 bekannt.

Die Greiferbacken sind plattenförmig ausgebildet und weisen eine Dicke in Verstellrichtung der Greiferbacken zueinander auf, die wesentliche kleiner als eine Breite und eine Höhe der Greiferbacken senkrecht zueinander und senkrecht zu der Dicke ist, wobei die Dicke vorzugsweise weniger als 1/5 und besonders bevorzugt als 1/10 mindestens eines von Höhe und Breite beträgt.

Die Greiferanordnung kann weiterhin einen Kabelkanal aufweisen, beispielsweise einen Kabelkanal der zuvor beschriebenen Art, der an seinen gegenüberliegenden innenseitigen Längsseiten bodenseitig jeweils eine Längsnut aufweist, wobei die Greiferbacken von einer Oberseite des Kabelkanals in den Kabelkanal eintauchen und mit ihren Vorsprüngen an ihren voneinander abgewandten Außenseiten in die Längsnuten eingreifen.

Mindestens eine der Greiferbacken weist an ihrer der jeweils gegenüberliegenden Greiferbacke zugewandten Innenseite eine Ausnehmung auf, die zu einer endseitigen Stirnseite und zu einer Längsseite der Greiferbacke offen ist. Vorzugsweise weisen beide Greiferbacken die konturierte Ausnehmung auf und besonders bevorzugt ist die konturierte Ausnehmung bei beiden Greiferbacken sowohl zu der endseitigen Stirnseite als auch zu der Längsseite der jeweiligen Greiferbacke offen.

Die Ausnehmung kann in einer endseitigen Ecke der Greiferbacke angeordnet sein und in diese münden, wobei die Ausnehmung im Bereich der Ecke unterbrechungsfrei sowohl zu der endseitigen Stirnseite als auch zu der Längsseite der Greiferbacke offen ist.

Die Greiferbacken können mindestens ein Paar sich gegenüberstehender identischer Ausnehmungen an ihren der jeweils gegenüberliegenden Greiferbacke zugewandten Innenseiten aufweisen.

Die Greiferanordnung kann weiterhin eine Bestückungskomponente aufweisen, beispielsweise eine Reihenklemme, die mit mindestens einer ihrer gegenüberliegenden Endseiten in eine Ausnehmung an der Innenseite mindestens einer der Greiferbacken eingreift. Vorzugsweise greift die Bestückungskomponente mit ihren gegenüberliegenden Endseiten in jeweils eine Ausnehmung an den beiden Innenseiten der beiden Greiferbacken ein.

Beispielsweise kann vorgesehen sein, dass die Bestückungskomponente mit ihren in die Ausnehmung eingreifenden Endseiten über die endseitige Stirnseite und/oder die Längsseite der Greiferbacke aus der Ausnehmung herausragt. Dabei kann die Bestückungskomponente mit einer Montageseite aus der Ausnehmung vorstehen, über welche sie an einer Unterlage festgelegt werden kann. Beispielsweise kann in dem Fall, dass die Bestückungskomponente eine Reihenklemme ist, die Reihenklemme mit ihrer Rastaufnahme zum Aufrasten auf eine Hutschiene oder dergleichen aus der Ausnehmung herausragen, so dass mit Hilfe der beschriebenen Greiferanordnung ein automatisiertes Bestücken von Hutschienen mit Reihenklemmen und gegebenenfalls weiteren Bestückungskomponenten möglich ist.

Die Bestückungskomponente kann an mindestens einem Anschlag anliegen, der von einer Berandung der Ausnehmung gebildet ist, wobei die Ausnehmung vorzugsweise eine sich in Breitenrichtung der Greiferbacke erstreckende Berandung, die einen Höhenanschlag bildet und/oder eine sich in Höhenrichtung erstreckende Berandung aufweist, die einen Seitenanschlag bildet. Die Anschläge können sich senkrecht zueinander erstrecken. Alternativ oder zusätzlich können die Anschläge in einem Eckbereich ineinander übergehen.

Mindestens eine der Greiferbacken kann an ihrer der jeweils gegenüberliegenden Greiferbacke zugewandten Innenseite eine Nut aufweisen, die sich entlang einer endseitigen Stirnseite der Greiferbacke erstreckt. Die Nut kann in eine Ausnehmung an einer der jeweils gegenüberliegenden Greiferbacke zugewandten Innenseite der Greiferbacken münden. Die Nut an der Innenseite der Greiferbacken kann insbesondere dazu dienen, Bestückungskomponenten aufzunehmen, die an mindestens einer von zwei gegenüberliegenden Außenseiten eine freie Kante aufweisen, über die die Komponente in die Nut eingreifen kann. Eine derartige Bestückungskomponente kann ein gekantetes oder anderweitig geformtes Blechteil sein, beispielsweise eine Hutschiene, wie sie im Schaltanlagen- und Steuerungsbau üblicherweise beispielsweise für die Montage von Reihenklemmen und weiteren Bestückungskomponenten für den Schaltanlagen- und Steuerungsbau verwendet wird.

Demgemäß kann bei einer Ausführungsform der Erfindung die Greiferanordnung weiterhin eine kanal- oder schienenförmige Bestückungskomponente aufweisen, beispielsweise eine Tragschiene, eine Hutschiene, einen Kabelkanal oder eine Kabelkanalabdeckung, die mit voneinander abgewandten und parallelen Längskanten in jeweils eine Nut an den gegenüberliegenden und einander zugewandten Innenseiten der Greiferbacken eingreifen.

Die Greiferbacken können an ihrem der Lineareinstelleinheit zugewandten Ende an ihren voneinander abgewandten Außenseiten eine Mulde aufweisen, die vorzugweise die Geometrie einer konkaven Nut aufweist und sich entlang der Breite der jeweiligen Greiferbacke erstreckt. Die Mulde kann insbesondere für die formschlüssige Aufnahme einer Befestigungskontur eines biegeschlaffen Bauteils, beispielsweise eines Kabelkanals, ausgebildet sein.

So ist bei einer Ausführungsform der Erfindung vorgesehen, dass die Greiferanordnung weiterhin einen Kabelkanal aufweist, dessen parallele Längsseiten von einer Vielzahl sich vom Boden des Kabelkanals erstreckender Finger gebildet sind, die an ihrem freien Ende an der Innenseite des Kabelkanals eine wulstförmige Kontur aufweisen. Dabei können die Greiferbacken von einer Oberseite des Kabelkanals in den Kabelkanal eintauchen und die Finger mit der wulstförmigen Kontur in die Mulden an den voneinander abgewandten Außenseiten der Greiferbacken eingreifen.

Weitere Einzelheiten der Erfindung werden anhand der nachstehenden Figuren erläutert. Dabei zeigt:
- Figur 1: in perspektivischer Darstellung eine beispielhafte Ausführungsform einer erfindungsgemäßen Greiferanordnung;
- Figur 2: eine Seitenansicht der Greiferanordnung gemäß Figur 1;
- Figur 3: eine perspektivische Sicht auf die Unterseite der Greiferanordnung nach den Figuren 1 und 2;
- Figur 4: eine perspektivische Darstellung einer weiteren Ausführungsform einer erfindungsgemäßen Greiferanordnung;
- Figur 5: eine Seitenansicht der Greiferanordnung gemäß Figur 4;
- Figur 6: in perspektivischer Darstellung noch eine weitere Ausführungsform der erfindungsgemäßen Greiferanordnung mit einem Kabelkanal;
- Figur 7: eine Seitenansicht mit Detailansicht der Ausführungsform gemäß Figur 6;
- Figur 8: in perspektivischer Darstellung noch eine weitere Ausführungsform der erfindungsgemäßen Greiferanordnung mit einem Kabelkanal;
- Figur 9: eine Seitenansicht der Ausführungsform gemäß Figur 8;
- Figur 10: in perspektivischer Darstellung noch eine weitere Ausführungsform einer erfindungsgemäßen Greiferanordnung mit einer Reihenklemme;
- Figur 11: eine Seitenansicht der Ausführungsform gemäß Figur 10;

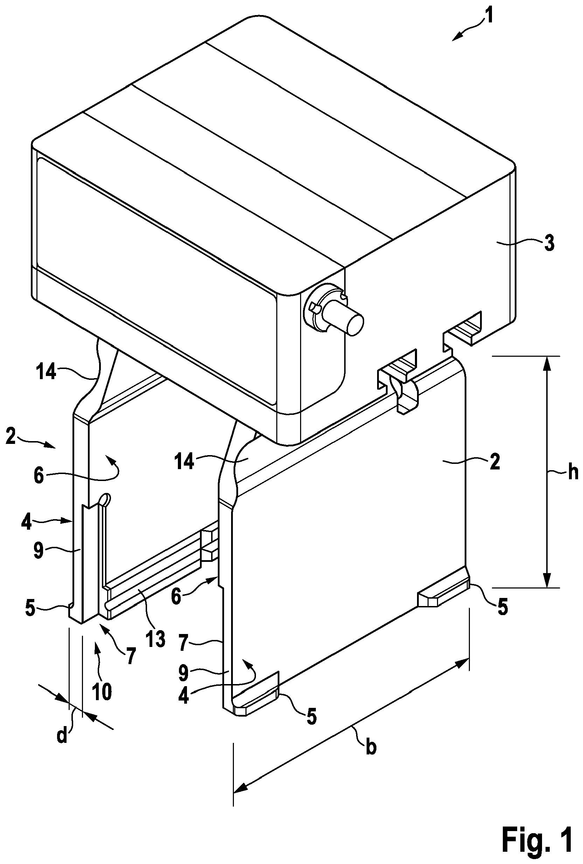

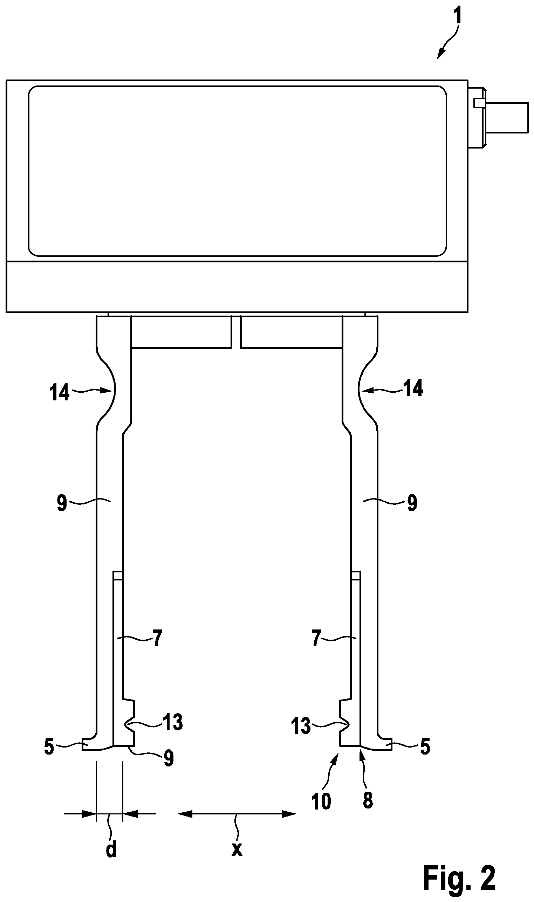

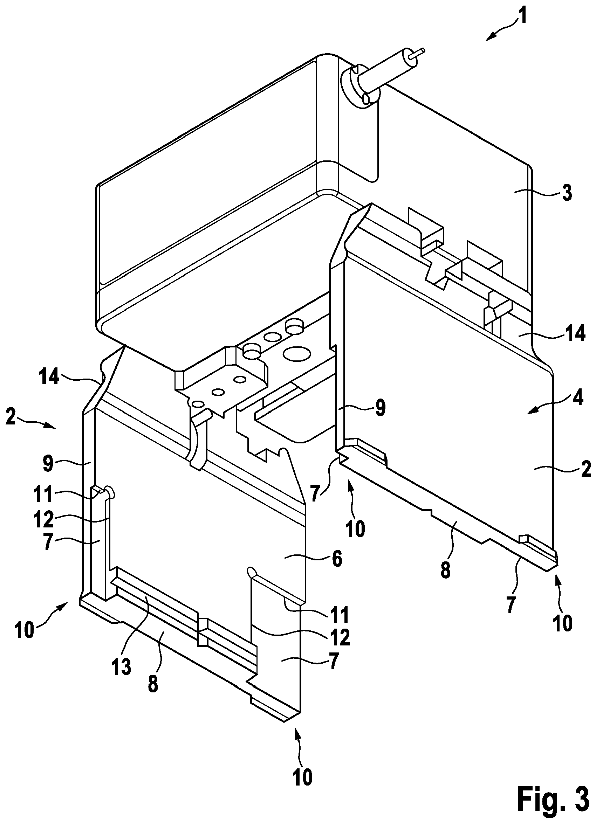

In den Figuren 1 bis 3 ist eine erste Ausführungsform einer erfindungsgemäßen Greiferanordnung 1 zur Komponentenbestückung von Montageplatten im Schaltanlagen- und Steuerungsbau gezeigt. Die Greiferanordnung 1 besteht im Wesentlichen aus zwei Greiferbacken 2, deren Abstand zueinander über die Linearstelleinheit 3 variiert werden kann, um zwischen den Greiferbacken Komponenten einzuklemmen oder, wie dies erfindungsgemäß insbesondere ebenso möglich ist, an den voneinander abgewandten Außenseiten 4 der Greiferbacken 2 eine Komponente, vorzugsweise eine biegeschlaffe Komponente über zwei gegenüberliegende Innenseiten dieser an der Greiferanordnung 1 festzulegen.

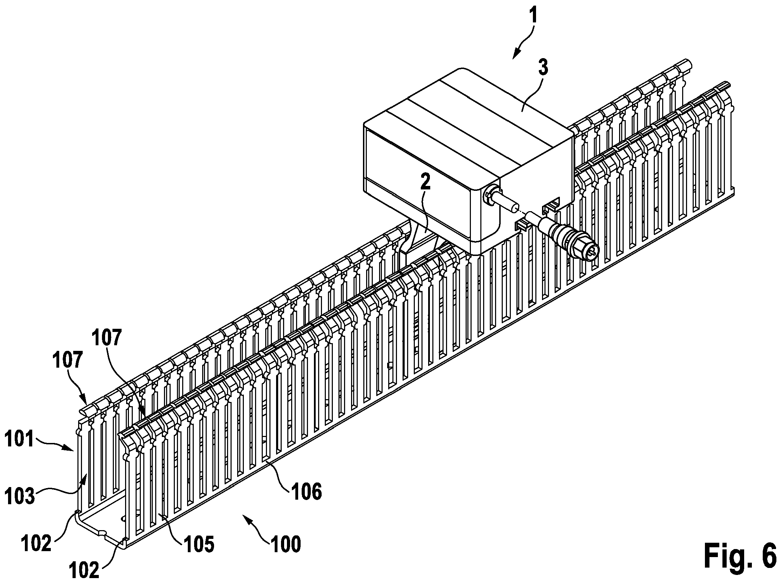

Insbesondere zur Stabilisierung biegeschlaffer Komponenten sind die Greiferbacken 2 plattenförmig ausgebildet und bieten somit eine vergleichsweise große Anlagefläche für biegeschlaffe Komponenten, welche dadurch eine Stabilisierung erfahren. Die biegeschlaffe Komponente kann beispielsweise ein Kabelkanal mit rechteckigem Querschnitt und abnehmbarer Abdeckung sein, dessen gegenüberliegende parallele Seitenwände von einer Vielzahl nebeneinander angeordneter elastischer Finger gebildet ist. Ein derartiger Kabelkanal ist beispielsweise in Figur 6 gezeigt.

Die Greiferbacken weisen eine Dicke d in der Verstellrichtung x der Greiferbacken 2 zueinander auf, die im vorliegenden Fall weniger als 1/10 sowohl der Breite b als auch der Höhe h der Greiferbacken 2 beträgt. Dadurch können die Greiferbacken 2 in einem vollständigen zusammengefahrenen Zustand, bei dem die Greiferbacken 2 maximal einander angenähert sind, eine kompakte Einheit bilden, deren Dicke ungefähr dem Zweifachen der Dicke d oder etwas mehr entspricht. Dadurch wird es ermöglicht, dass die Greiferbacken 2 auch in vergleichsweise kompakt bauende Komponenten, insbesondere biegeschlaffe Komponenten wie Kabelkanäle der zuvor beschriebenen Art mit kleinem Querschnitt eintauchen und in der zuvor beschriebenen Weise durch Einklemmung über die gegenüberliegenden Außenseiten 4 der Greiferbacken 2 festlegen können.

Die Greiferbacken 2 weisen an ihrer Innenseite 6 jeweils zwei Ausnehmungen 7 unterschiedlicher Geometrie auf, um das Einklemmen von Komponenten mit unterschiedlich geformten Endseiten zu ermöglichen. Dabei sind die Ausnehmungen 7 zu der endseitigen Stirnseite 8 und zu der Längsseite 9 der Greiferbacke 2 offen, um das einfache und positionssichere Einführen der Komponente zwischen den Greiferbacken 2 zu fördern. Die Ausnehmungen 7 sind in einem unteren Eckbereich 10 der Greiferbacken 2 angeordnet und die Öffnungen zu der Stirnseite 8 und der Längsseite 9 gehen in dem Eckbereich 10 ineinander über, so dass das Einsetzen einer Komponente in die Ausnehmung 7 durch Hineingleiten möglich ist.

Um eine präzise Anordnung der Komponente zwischen den Greiferbacken 2 zu ermöglichen, was für die reproduzierbare Anordnung der Komponenten im Rahmen des Schaltanlagen- und Steuerungsbaus zwingend erforderlich ist, weisen die Ausnehmungen 7 zwei Anschläge 11, 12 auf, die gerade von zwei senkrecht zueinander stehenden Berandungen der Ausnehmungen 7 gebildet sind. Die beiden Anschläge 11, 12 stehen senkrecht zueinander und erstrecken sich parallel beabstandet zu der Längsseite 9 beziehungsweise der Stirnseite 8 der Greiferbacke 2.

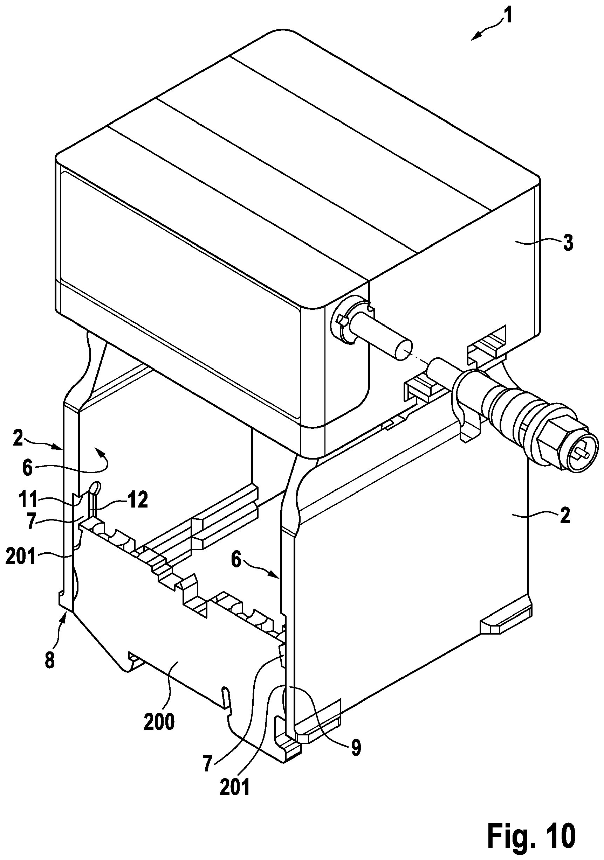

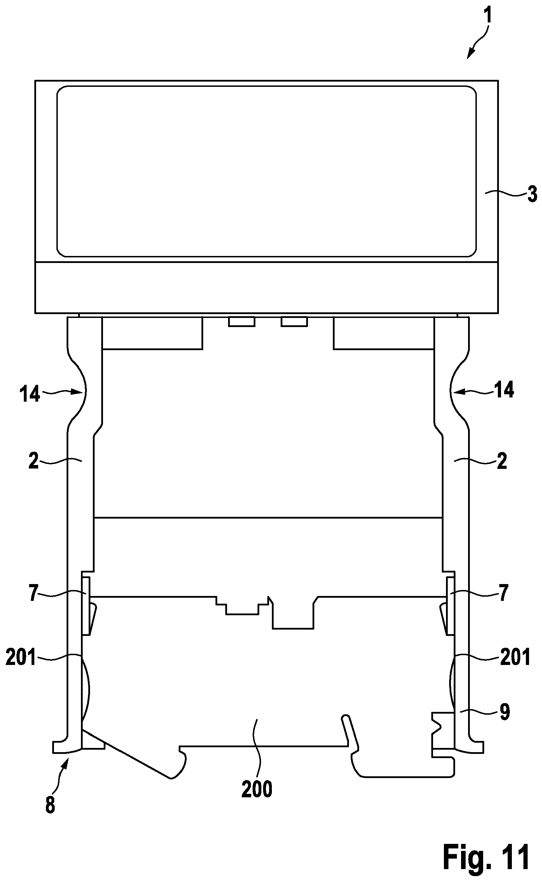

Die Figuren 10 und 11 zeigen eine Ausführungsform, bei der eine Bestückungskomponente 200, die eine Reihenklemme ist, über ihre gegenüberliegenden Außenseiten 210 in jeweils einer von zwei gegenüberliegenden Ausnehmungen 7 an den Innenseiten 6 der gegenüberliegenden Backen 2 aufgenommen ist. Es ist weiterhin zu erkennen, dass die Reihenklemme 200 lediglich an dem Vertikalanschlag 12 anliegt und einen Abstand zu dem Horizontalanschlag 11 aufweist. Es ist weiterhin zu erkennen, dass die Bestückungskomponente 200 mit ihren in die Ausnehmungen 7 eingreifenden Endseiten 201 über die endseitigen Stirnseiten 8 der Greiferbacke 2 aus den Ausnehmungen 7 herausragen, während die äußere flache Seitenwand der Bestückungskomponente 200, welche die Endseiten 201 miteinander verbindet, mit den Längsseiten 9 der Greiferbacken 2 fluchtet.

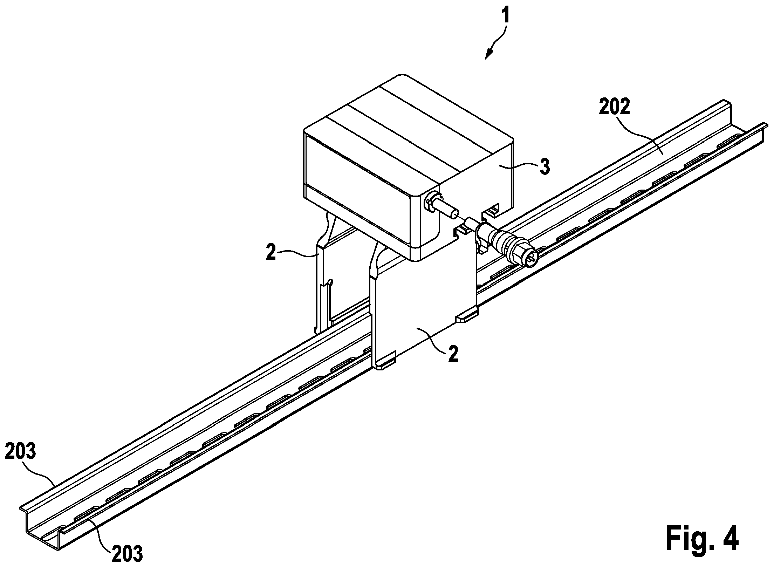

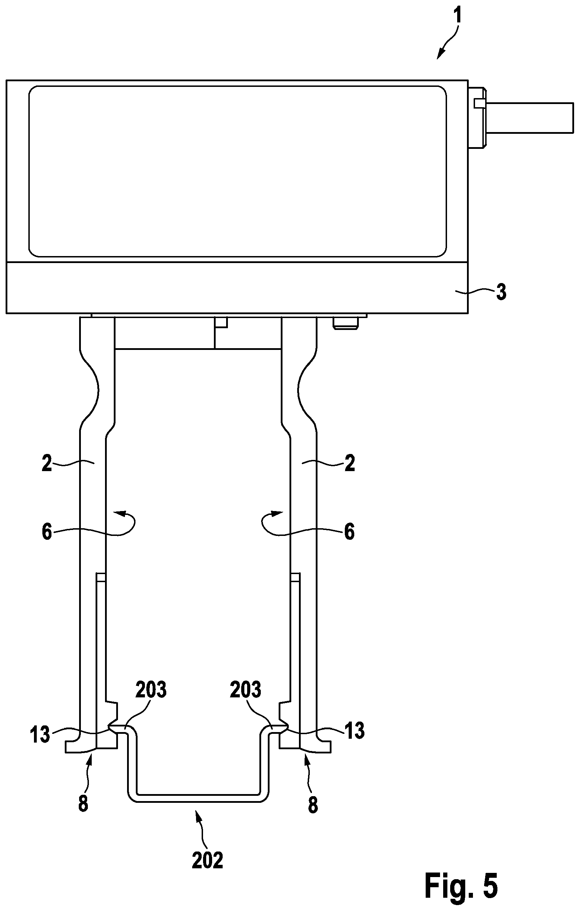

Bei der in den Figuren 4 und 5 gezeigten Ausführungsform weisen die Greiferbacken 2 an ihren der jeweils gegenüberliegenden Greiferbacke 2 zugewandten Innenseiten 6 eine Nut 13 auf, die sich entlang der endseitigen Stirnseite 8 der Greiferbacke 2 erstreckt. Die Greiferanordnung 1 weist weiterhin eine schienenförmige Bestückungskomponente auf, die im vorliegenden Fall als eine hutschienenförmige Tragschiene 202 ausgebildet ist, die mit ihren voneinander abgewandten parallelen Längskanten 203 in jeweils eine der Nuten 13 an den gegenüberliegenden und einander zugewandten Innenseite 6 der Greiferbacken 2 eingreift und so zwischen den Greiferbacken 2 positionsfest verklemmt werden kann.

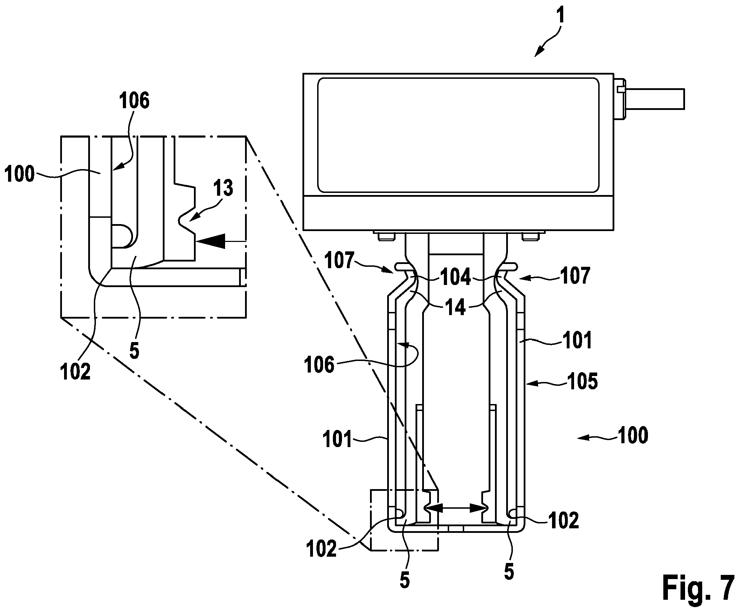

Die Ausführungsform gemäß den Figuren 6 und 7 zeigt eine Greiferanordnung 1, bei der die Greiferbacken 2 über im Wesentlichen ihre gesamte Höhe in die Bestückungskomponente 100 eingreifen, die vorliegend als ein Kabelkanal mit entfernter Abdeckung (nicht dargestellt) ausgebildet ist. Der Kabelkanal 100 weist parallele Längsseiten 106 auf, die von einer Vielzahl sich vom Boden des Kabelkanals 100 erstreckender Finger 105 gebildet sind. Die Finger 105 weisen an ihrem freien Ende an der Innenseite 103 des Kabelkanals 100 eine wulstförmige Kontur 104 auf. Die Greiferbacken 2 tauchen von der Oberseite des Kabelkanals 100 in den Kabelkanal 100 ein, so dass die Finger 105 mit der wulstförmigen Kontur 104 in die Mulden 14 an den voneinander abgewandten Außenseiten 4 der Greiferbacken 2 eingreifen, wodurch die instabilen freien Enden der Finger 105 eine Stabilisierung erfahren. Eine weitere Fixierung der Greiferbacken 2 in Bezug auf den Kabelkanal 100 wird dadurch erreicht, dass die Greiferbacken 2 mit ihren endseitigen Vorsprüngen 5 an den voneinander abgewandten Außenseiten 4 in eine bodenseitige Nut 102 eingreifen.

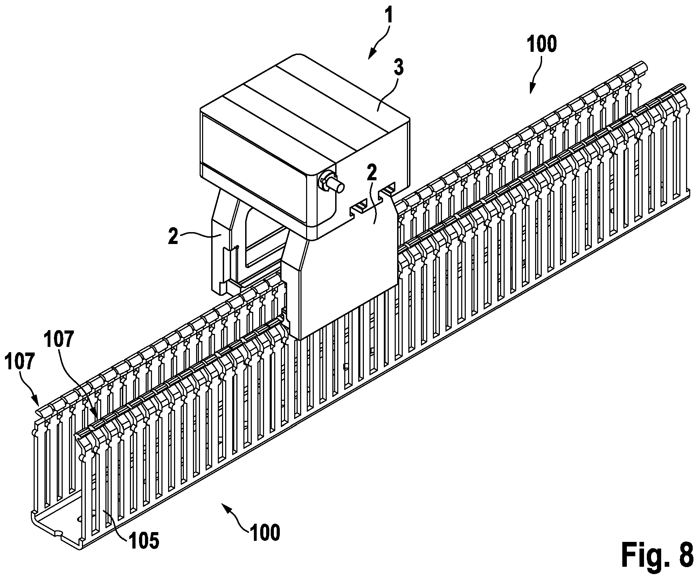

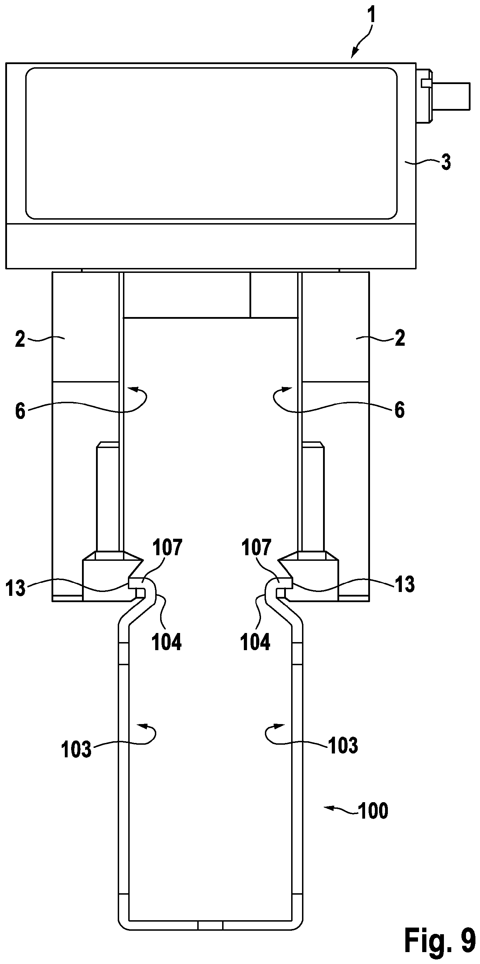

Abweichend von der in den Figuren 6 und 7 gezeigten Ausführungsform ist bei der Ausführungsform gemäß den Figuren 8 und 9 vorgesehen, dass die Greiferbacken 2 bei der Manövrierung eines Kabelkanals 100 ausschließlich an den oberen freien und parallelen Längskanten 107 an den Enden der Finger 105 angreifen, wobei es zu einer elastischen Verformung der Finger 105 kommt, um den nötigen Kraftschluss zwischen den Greiferbacken 2 und den Fingern 105 des Kabelkanals 100 herzustellen. Auch diese Art der Manövrierung wird dadurch ermöglicht, dass die Greiferbacken 2 plattenförmig ausgebildet sind und damit eine vergleichsweise große Anlagefläche der Greiferbacken 2 an den Enden der Finger 105 bieten.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Greiferanordnung
- 2: Greiferbacke
- 3: Linearstelleinheit
- 4: Außenseite
- 5: Vorsprung
- 6: Innenseite
- 7: Ausnehmung
- 8: Stirnseite
- 9: Längsseite
- 10: Ecke
- 11: Höhenanschlag
- 12: Seitenanschlag
- 13: Nut
- 14: Mulde
- 100: Kabelkanal
- 101: Längsseite
- 102: Längsnut
- 103: Innenseite
- 104: Kontur
- 105: Finger
- 106: Längsseite
- 107: Längskante
- 200: Bestückungskomponente
- 201: Endseite
- 202: Tragschiene
- 203: Längskante
- b: Breite
- d: Dicke
- h: Höhe
- x: Verstellrichtung

## Patentansprüche

1. Greiferanordnung (1) zur Komponentenbestückung von Montageplatten im Schaltanlagen- und Steuerungsbau, wobei die Greiferanordnung (1) zwei Greiferbacken (2) aufweist, deren Abstand zueinander über eine Linearstelleinheit (3) einstellbar ist, wobei die Greiferbacken (2) an ihren voneinander abgewandten Außenseiten (4) endseitig jeweils mindestens einen Vorsprung (5) aufweisen, wobei die Greiferbacken (2) plattenförmig ausgebildet sind und eine Dicke (d) in Verstellrichtung (x) der Greiferbacken (2) zueinander aufweisen, die wesentlich kleiner als eine Breite (b) und eine Höhe (h) der Greiferbacken (2) senkreckt zueinander und senkrecht zu der Dicke (d) ist, wobei mindestens eine der Greiferbacken (2) an ihrer der jeweils gegenüber liegenden Greiferbacke (2) zugewandten Innenseite (6) eine Ausnehmung (7) aufweist, **dadurch gekennzeichnet, dass** die Ausnehmung (7) zu einer endseitigen Stirnseite (8) und zu einer Längsseite (9) der Greiferbacke (2) offen ist.

2. Greiferanordnung (1) nach Anspruch 1, bei der die Dicke (d) weniger als ein Fünftel und besonders bevorzugt weniger als ein Zehntel mindestens eines von Höhe und Breite beträgt.

3. Greiferanordnung (1) nach Anspruch 1 oder 2, die weiterhin einen Kabelkanal (100) aufweist, der an seinen gegenüberliegenden innenseitigen Längsseiten (101) bodenseitig jeweils eine Längsnut (102) aufweist, wobei die Greiferbacken (2) von einer Oberseite des Kabelkanals (100) in den Kabelkanal (100) eintauchen und mit ihren Vorsprüngen (5) an den voneinander abgewandten Außenseiten (4) in die Längsnuten (102) eingreifen.

4. Greiferanordnung (1) nach einen der vorangegangenen Ansprüchen, bei der beide Greiferbacken (2) die konturierte Ausnehmung (7) aufweisen, die bei beiden Greiferbacken (2) sowohl zu der endseitigen Stirnseite (8) als auch zu der Längsseite (9) der Greiferbacke (2) offen ist.

5. Greiferanordnung (1) nach Anspruch 4, bei der die Ausnehmung (7) in eine endseitige Ecke (10) der Greiferbacke mündet und im Bereich der Ecke (10) unterbrechungsfrei sowohl zu der endseitigen Stirnseite (8) als auch zu der Längsseite (9) der Greiferbacke (2) offen ist.

6. Greiferanordnung (1) nach einem der vorangegangenen Ansprüche, bei der die Greiferbacken (2) mindestens ein Paar sich gegenüber stehender identischer Ausnehmungen (7) an ihren der jeweils gegenüber liegenden Greiferbacke (2) zugewandten Innenseiten (6) aufweisen.

7. Greiferanordnung (1) nach einem der Ansprüche 4 bis 6, die weiterhin eine Bestückungskomponente (200), beispielsweise eine Reihenklemme, aufweist, die mit mindestens einer ihrer gegenüberliegenden Endseiten (201) in eine Ausnehmung (7) an der Innenseite (6) mindestens einer der Greiferbacken (2) eingreift.

8. Greiferanordnung (1) nach Anspruch 7, bei der die Bestückungskomponente (200) mit ihrer in die Ausnehmung (7) eingreifenden Endseite (201) über die endseitige Stirnseite (8) und/oder die Längsseite (9) der Greiferbacke (2) aus der Ausnehmung (7) herausragt.

9. Greiferanordnung (1) nach Anspruch 7 oder 8, bei der die Bestückungskomponente (200) an mindestens einem Anschlag (11, 12) anliegt, der von einer Berandung der Ausnehmung (7) gebildet ist, wobei die Ausnehmung (7) vorzugsweise eine sich in Breitenrichtung des Greiferbacke erstreckende Berandung, die einen Höhenanschlag (11) bildet und/oder eine sich in Höhenrichtung erstreckende Berandung, die einen Seitenanschlag (12) bildet, aufweist.

10. Greiferanordnung (1) nach einem der vorangegangenen Ansprüche, bei der mindestens eine der Greiferbacken (2) an ihrer der jeweils gegenüber liegenden Greiferbacke (2) zugewandten Innenseite (6) eine Nut (13) aufweist, die sich entlang einer endseitigen Stirnseite (8) der Greiferbacke (2) erstreckt.

11. Greiferanordnung (1) nach Anspruch 10, bei der die Nut (13) in eine Ausnehmung (7) an einer der jeweils gegenüber liegenden Greiferbacke (2) zugewandten Innenseite (6) der Greiferbacke (2) mündet.

12. Greiferanordnung (1) nach Anspruch 10 oder 11, die weiterhin eine kanal- oder schienenförmige Bestückungskomponente (200) aufweist, beispielsweise eine Tragschiene (202), eine Hutschiene, ein Kabelkanal (100), oder eine Kabelkanalabdeckung, die mit voneinander abgewandten und parallelen Längskanten (203, 107) in jeweils eine Nut (13) an den gegenüberliegenden und einander zugewandten Innenseiten (6) der Greiferbacken (2) eingreift.

13. Greiferanordnung (1) nach einem der vorangegangenen Ansprüche, bei der die Greiferbacken (2) an ihrem der Linearstelleinheit (3) zugewandten Ende an ihren voneinander abgewandten Außenseiten (4) eine Mulde (14) aufweisen, die vorzugsweise die Geometrie einer konkaven Nut aufweist und sich entlang der Breite (b) der jeweiligen Greiferbacke (2) erstreckt.

14. Greiferanordnung (1) nach Anspruch 13, die weiterhin einen Kabelkanal (100) aufweist, dessen parallele Längsseiten (106) von einer Vielzahl sich vom Boden des Kabelkanals (100) erstreckender Finger (105) gebildet sind, die an ihrem freien Ende an der Innenseite (103) des Kabelkanals (100) eine wulstförmige Kontur (104) aufweisen, wobei die Greiferbacken (2) von einer Oberseite des Kabelkanals (100) in den Kabelkanal (100) eintauchen und die Finger (105) in die Mulden (14) an den voneinander abgewandten Außenseiten (4) der Greiferbacken (2) eingreifen.

## Claims

1. A gripper arrangement (1) for component placement on mounting plates in switchgear and control system manufacturing, the gripper arrangement (1) having two gripper jaws (2) whose distance from one another can be adjusted by means of a linear adjusting unit (3), wherein the gripper jaws (2) each have at least one projection (5) at the end on their outer sides (4) facing away from one another, wherein the gripper jaws (2) are plate-shaped and have a thickness (d) in the direction of displacement (x) of the gripper jaws (2) relative to each other which is substantially smaller than a width (b) and a height (h) of the gripper jaws (2) perpendicular to each other and perpendicular to the thickness (d), wherein at least one of the gripper jaws (2) has a recess (7) on its inner side (6) facing the respective opposite gripper jaw (2), **characterized in that** the recess (7) is open towards an end face (8) and towards a longitudinal side (9) of the gripper jaw (2).

2. The gripper arrangement (1) according to claim 1, wherein the thickness (d) is than one fifth and particularly preferably less than one tenth of at least one of the height and width.

3. The gripper arrangement (1) according to claim 1 or 2, which further comprises a cable duct (100) which has a respective longitudinal groove (102) on the bottom side on its opposite inner-side longitudinal sides (101), wherein the gripper jaws (2) dip into the cable duct (100) from an upper side of the cable duct (100) and engage in the longitudinal grooves (102) with their projections (5) on the outer sides (4) facing away from one another.

4. The gripper assembly (1) according to any one of the preceding claims, wherein both gripper jaws (2) have the contoured recess (7), which in both gripper jaws (2) is open both to the end face (8) and to the longitudinal side (9) of the gripper jaw (2).

5. The gripper arrangement (1) according to claim 4, in which the recess (7) opens into an end corner (10) of the gripper jaw and, in the region of the corner (10), is open without interruption both to the end face (8) and to the longitudinal side (9) of the gripper jaw (2).

6. The gripper assembly (1) according to any one of the preceding claims, wherein the gripper jaws (2) have at least one pair of opposing identical recesses (7) on their inner sides (6) facing the respective opposing gripper jaw (2).

7. The gripper assembly (1) according to any one of claims 4 to 6, further comprising a placement component (200), for example a terminal block, which engages with at least one of its opposite end sides (201) in a recess (7) on the inner side (6) of at least one of the gripper jaws (2).

8. The gripper arrangement (1) according to claim 7, in which the placement component (200) protrudes from the recess (7) with its end side (201) engaging in the recess (7) beyond the end face (8) and/or the longitudinal side (9) of the gripper jaw (2).

9. The gripper arrangement (1) according to claim 7 or 8, in which the placement component (200) rests against at least one stop (11, 12) formed by a rim of the recess (7), the recess (7) preferably having a rim extending in the width direction of the gripper jaw and forming a height stop (11) and/or a rim extending in the height direction and forming a side stop (12).

10. The gripper arrangement (1) according to one of the preceding claims, in which at least one of the gripper jaws (2) has, on its inner side (6) facing the respective opposite gripper jaw (2), a groove (13) which extends along an end face (8) of the gripper jaw (2).

11. The gripper arrangement (1) according to claim 10, in which the groove (13) opens into a recess (7) on an inner side (6) of the gripper jaw (2) facing the respective opposite gripper jaw (2).

12. The gripper assembly (1) according to claim 10 or 11, further comprising a channel- or rail-shaped placement component (200), for example a mounting rail (202), a top-hat rail, a cable duct (100), or a cable duct cover, which engages with longitudinal edges (203, 107) facing away from and parallel to each other in a respective groove (13) on the opposing and facing inner sides (6) of the gripper jaws (2).

13. The gripper arrangement (1) according to any one of the preceding claims, in which the gripper jaws (2) have, at their end facing the linear adjusting unit (3), on their outer sides (4) facing away from one another, a trough (14) which preferably has the geometry of a concave groove and extends along the width (b) of the respective gripper jaw (2).

14. The gripper assembly (1) according to claim 13, further comprising a cable channel (100) whose parallel longitudinal sides (106) are formed by a plurality of fingers (105) extending from the bottom of the cable channel (100) and having a bead-shaped contour (104) at their free end on the inner side (103) of the cable channel (100), wherein the gripper jaws (2) dip into the cable duct (100) from an upper side of the cable duct (100) and the fingers (105) engage in the troughs (14) on the outer sides (4) of the gripper jaws (2) facing away from each other.

## Revendications

1. Dispositif à pince (1) pour le montage de composants de plaques de montage dans la construction d'installations de commutation et de commande, dans lequel le dispositif à pince (1) comprend deux mâchoires de pince (2) dont la distance entre elles peut être réglée par l'intermédiaire d'une unité de réglage linéaire (3), dans lequel les mâchoires de pince (2) comprennent chacune, au niveau de leurs faces externes (4) opposées entre elles, côté extrémité, au moins une saillie (5), dans lequel les mâchoires de pince (2) présentent la forme de plaques, et une épaisseur (d) dans la direction de déplacement (x) des mâchoires de pince (2) l'une vers l'autre, qui est nettement inférieure à une largeur (b) et une hauteur (h) des mâchoires de pince (2) perpendiculairement entre elles et est perpendiculaire à l'épaisseur (d), dans lequel au moins une des mâchoires de pince (2) comprend, au niveau de sa face interne (6) orientée vers la mâchoire de pince (2) disposée en face, un évidement (7), **caractérisé en ce que** l'évidement (7) est ouvert vers une face frontale côté extrémité (8) et vers une face longitudinale (9) de la mâchoire de pince (2).

2. Dispositif à pince (1) selon la revendication 1, dans lequel l'épaisseur (d) est représente moins d'un cinquième et plus particulièrement de préférence moins d'un dixième d'au moins une dimension parmi la hauteur et la largeur.

3. Dispositif à pince (1) selon la revendication 1 ou 2, qui comprend en outre une goulotte de câble (100) qui présente, au niveau de ses faces longitudinales (101), côté fond, une rainure longitudinale (102), dans lequel les mâchoires de pince (2) plongent d'un côté supérieur de la goulotte de câble (100) dans la goulotte de câble (100) et s'emboîtent, avec leurs saillies (5), au niveau des faces externes (4) opposées entre elles, dans les rainures longitudinales (102).

4. Dispositif à pince (1) selon l'une des revendications précédentes, dans lequel les deux mâchoires de pince (2) présentent l'évidement profilé (7) qui, dans les deux mâchoires de pince (2), est ouvert aussi bien vers la face frontale côté extrémité (8) que vers la face longitudinale (9) de la mâchoire de pince (2).

5. Dispositif à pince (1) selon la revendication 4, dans lequel l'évidement (7) débouche dans un angle côté extrémité (10) de la mâchoire de pince et est ouvert, au niveau de l'angle (10) sans interruption aussi bien vers la face frontale côté extrémité (8) que vers la face longitudinale (9) de la mâchoire de pince (2).

6. Dispositif à pince (1) selon l'une des revendications précédentes, dans lequel les mâchoires de pince (2) comprennent au moins une paire d'évidements (7) identiques se faisant face, au niveau de leurs faces internes (6) orientées respectivement vers la mâchoire de pince (2) se trouvant en face.

7. Dispositif à pince (1) selon l'une des revendications 4 à 6, qui comprend en outre un composant de montage (200), par exemple une borne en série, qui s'emboîte, avec au moins une de ses faces d'extrémité opposées (201), dans un évidement (7) sur la face interne (6) d'au moins une des mâchoires de pince (2).

8. Dispositif à pince (1) selon la revendication 7, dans lequel le composant de montage (200) dépasse, avec sa face d'extrémité (201) s'emboîtant dans l'évidement (7), par l'intermédiaire de la face frontale côté extrémité (8) et/ou de la face longitudinale (9) de la mâchoire de pince (2) hors de l'évidement (7).

9. Dispositif à pince (1) selon la revendication 7 ou 8, dans lequel le composant de montage (200) s'appuie contre au moins une butée (11, 12), qui est constituée d'une bordure de l'évidement (7), dans lequel l'évidement (7) comprend de préférence une bordure s'étendant dans la direction de la largeur de la mâchoire de pince, qui constitue une butée en hauteur (11) et/ou une bordure s'étendant dans la direction de la hauteur, qui constitue une butée latérale (12).

10. Dispositif à pince (1) selon l'une des revendications précédentes, dans lequel au moins une des mâchoires de pince (2) comprend au niveau de sa face interne (6), orientée vers la mâchoire de pince (2) disposée en face, une rainure (13) qui s'étend le long d'une face frontale côté extrémité (8) de la mâchoire de pince (2).

11. Dispositif à pince (1) selon la revendication 10, dans lequel la rainure (13) débouche dans un évidement (7) au niveau d'une face interne (6) de la mâchoire de pince (2), orientée vers la mâchoire de pince (2) disposée en face.

12. Dispositif à pince (1) selon la revendication 10 ou 11, qui comprend en outre des composants de montage (200) en forme de canaux ou de rails, par exemple un rail de support (202), un rail DIN, une goulotte de câble (100) ou un couvercle de goulotte de câble qui s'emboîte, avec des arêtes longitudinales (203, 107) opposées entre elles et parallèles, respectivement dans une rainure (13) au niveau des faces internes (6) opposées et orientées l'un vers l'autre des mâchoires de pince (2).

13. Dispositif à pince (1) selon l'une des revendications précédentes, dans lequel les mâchoires de pince (2) comprennent, au niveau de leur extrémité orientée vers l'unité de réglage linéaire (3), au niveau de leurs faces externes (4) opposées entre elles, une cavité (14) qui présente de préférence la géométrie d'une rainure concave et s'étend le long de la largeur (b) de la mâchoire de pince (2) correspondante.

14. Dispositif à pince (1) selon la revendication 13, qui comprend en outre une goulotte de câble (100), dont les faces longitudinales parallèles (106) sont constituées d'une pluralité de doigts (105) s'étendant à partir du fond de la goulotte de câble (100), qui présentent, au niveau de leur extrémité libre, au niveau de la face interne (103) de la goulotte de câble (100), un contour en forme de bourrelet (104), dans lequel les mâchoires de pince (2) plongent d'un côté supérieur de la goulotte de câble (100) dans la goulotte de câble (100) et les doigts (105) s'emboîtent dans les cavités (14) au niveau des faces externes (4), opposées entre elles, des mâchoires de pince (2).
